# EUROPEAN PATENT APPLICATION

(11) **EP 2 116 795 A1**
(43) Date of publication of application: **11.11.2009**
(21) Application number: 07822964.8
(22) Date of filing: 04.10.2007
(51) Int. Cl.: F24J 2/54

(54) **SOLAR TRACKER AND METHOD FOR PRE-ASSEMBLY, TRANSPORT AND FINAL ASSEMBLY THEREOF**

(30) Priority: 20.10.2006 ES 200602667
(71) Applicant: Apia Xxi, S.a., 39005 Santander (ES); Isofoton, S.a., 28014 Madrid (ES)
(72) Inventor: BOFILL TORTOSA, Miguel Angel, 28014 Madrid (ES); PANTALEON PRIETO, Marco Jesus, 39005 Santander (ES); CORREIA SANTOS, Manuel, 39005 Santander (ES); EYRAS DAGUERRE, Ramón, 28014 Madrid (ES)
(74) Representative: Gonzalez Palmero, Fé
(86) International application number: PCT/ES2007/000557
(87) International publication number: WO 2008/046937

(57) **Abstract**

The sun-follower is comprised of support column (2) made of reinforced concrete and is hollow, in order to house the different mechanisms, devices and electronic components that ensure the proper functioning of said sun-follower. A mobile metal structure with azimuthal (9) and zenithal (10) rotation axes is mounted on said support column (2), said metal structure being comprised of a robust metal and horizontal tube (5) on which crossbeams (7) are solidly joined, whereto a plurality of solar panel (14) horizontal support rods (8) are fastened by means of inverted "U-shaped" parts (11), said solar panels (14) being joined together and to the rods (8) by means of gluing with a high-performance adhesive in a module-based (1) preassembly. As a result of its structure, the sun-follower's weight is reduced and each constituent element is better adapted to its function, which also facilitates and expedites its assembly, independent of whether the concrete column (2) offers better technical conditions for the corresponding units and electronic components that those offered by classic metal support columns. Figure 2.

## Description

### OBJECT OF THE INVENTION

The present invention relates to a sun-follower, the obvious purpose of which is to follow and determine optimal alignment with the sun's path, in order to achieve optimum solar ray collection.

The object of the sun-follower, which includes a plurality of preferably photovoltaic solar panels, is to achieve the movement required by the corresponding solar panel support structure, so that said panels follow the sun's movement and constantly receive solar rays perpendicularly, thereby considerably increasing the collection of solar radiation and the efficiency of the photovoltaic solar panels.

Another object of the invention is to simplify the overall assembly, in addition to reducing its weight with regard to conventional sun-followers, in order to ensure the maximum adaptation of each element to its function. The invention equally relates to the preassembly, transport and final assembly procedure thereof.

The invention is applicable in the industrial sector in relation to the manufacture and installation of solar panels and structures aimed at optimizing solar energy, specifically in the field of sun-followers.

### BACKGROUND OF THE INVENTION

Sun-followers basically consist of mobile structures whereon solar panels are mounted, said structures being aligned at all times in order to obtain the optimal angular position wherein the solar rays strike the surface of the panels perpendicularly.

It is a well-known fact that sun-followers can comprise a one- or two-axis structure, one for azimuthal rotation and the other for zenithal rotation, the latter being responsible for tilting the panels to a higher or lower degree.

On the other hand, current sun-followers are structured in such a way that several panels are grouped within a single structure, for the purpose of optimizing available space.

However, evolution in this field is aimed at large and robust sun-followers, designed to ensure a long service life of up to twenty-five years during which functioning and performance are satisfactory, thereby ensuring return on investment.

In this respect, we can refer to Spanish patent P 200402167, which discloses a structure wherein the photovoltaic solar panels are mounted in separate rows at different level and with two inclinations, aimed at increasing panel ventilation, in addition to guarding against the possible consequences of thermal expansion within the sphere of application of the panels. In said patent of invention, the solar panels are anchored to a support by means of clevis pins and clips, which is in turn fastened to the corresponding frame of the general sun-follower's structure, said frame having an "H-shaped" configuration resting on oscillating supports pertaining to a head frame mounted on the top of the general support column of the assembly. In the sun-follower of the present invention, structure tilt is achieved by means of a tensor.

In the aforementioned patent of invention, the sun-follower's manufacturing process is complex as a result of having to use special parts tailored to the specific design proposed in each case, standard parts not being valid. Another drawback is the considerable weight of the structure, which is a disadvantage in terms of transport, assembly, handling, etc.

Other problems and drawbacks of the sun-follower corresponding to P 200402167, in addition to current sun-followers, resides in the fact that the whole assembly, including the support column, is metal, requiring numerous and complex joining means between the different parts that comprise the assembly. Additionally, the metal nature of all the parts, including the joining means, deteriorates and shortens their service life, requiring constant maintenance to try to prolong their duration, which logically involves a substantial increase in costs.

Another drawback of conventional sun-followers is the fact the solar panels are supplied disassembled, i.e. they must be assembled individually by means of screws, which lengthens and raises the cost of the installation process, not to mention the arduous task of loading, unloading, handling, etc., required to transport the different components.

### DESCRIPTION OF THE INVENTION

The sun-follower recommended herein has been designed to resolve the previously described problems, thereby making better use of the solar panels while increasing their reliability and efficiency, thus reducing the final cost of the assembly. The additional benefits and advantages obtained will be further expounded upon hereinafter.

More specifically, the first innovative characteristic of the sun-follower of the present invention resides in the fact that the corresponding support column is composed of reinforced concrete, comprising a more rigid, versatile and economic support for the mobile structure arranged above for solar panel assembly. Said concrete column is hollow and will preferably have a truncated-cone or truncated-pyramid configuration, thereby providing better technical conditions for the mechanisms, devices and electronic components inside thereof, with respect to conventional metal configurations.

We must also add that the reinforced concrete composition of the support column offers greater and improved protection for the mechanisms and electrical devices inside thereof, creating a much more favourable internal environment than in the case of conventional metal columns, thereby improving performance and prolonging their service life. On the other hand, this also implies that the devices or systems arranged inside the column can be cheaper, as less emphasis will be placed on robustness, operating temperature range, protection against harsh weather conditions and other similar considerations.

The new mobile structure and solar panel support design are equally innovative, consisting of a large metal tube, helicoidally welded and assembled horizontally at the top of the concrete column, including an axis for azimuthal tracking, the rotation and subsequent tracking of which is achieved by means of a calyx actuated by a worm screw or driving pinion, thereby achieving optimum azimuthal tracking by the mobile structure in all cases. Additionally, a zenithal rotation axis intervenes in the assembly of said tube on the column in order to provide the mobile structure with tilting capacity, which can be operated in the same manner as the azimuthal tracking axis, but with the added possibility of being operated by electrical or hydraulic means so as to guarantee the required movements.

A plurality of crossbeams comprised of rolled steel or formed plate profiles are fastened parallel to said horizontal tube, between which the respective and adequate supports are inserted, arranged in an approximately vertical manner and along which a series of rods are fastened as supporting elements for the solar panels, whereby the crossbeams are fastened transversally to said rods by means of gluing with a high-performance adhesive, increasing panel assembly speed while acting as an anti-theft mechanism for the panels, since there are no mechanical elements that can be disassembled. Additionally, said fastening system by means of gluing is resistant to the weather conditions to which the sun-follower will be exposed and subjected.

As regards the fastening of said panel-supporting rods to the crossbeams, this is carried out using inverted "U-shaped" parts which are clamped to the rods and fastened to the crossbeams by means of screws, through flaps wherein the ends of the side branches of the "U-shaped" parts are extended perpendicularly, in such a way as to allow sliding movements along the rods in both directions.

In a variation on this embodiment, the rods are interrupted at their intersection with the crossbeams, said interruption including a socket-like tubular section whereto the ends of the rods that concur in said area are connected and fastened by means of the "U-shaped" part, but in this case complemented by passing screws through the middle ramp of the "U-shaped" part, which are threaded through said socket-like tubular section and through the ends of the rods connected thereof. In this case, sliding along the rods is disabled, said rods being fastened to the crossbeams through the outer flaps corresponding to the side branches of the "U-shaped" parts.

These two systems for connecting and fastening the rods to the crossbeams are simple, quickly executed and have optimal rigidization, in addition to the fact that the connections between the rods and the crossbeams are concentrated in a single point on the latter, thus reducing the number of seams and facilitating access to said connections.

All the metal elements will be protected by galvanization, paint or duplex systems that reinforce said protection.

Similarly, another object of the invention worthy of mention is the fact that the sun-follower is designed in such a way as to expedite and improve the construction process, from manufacturing to onsite assembly, in addition to its lack of special transport requirements.

Said construction procedure is based on factory assembly of the solar panels in groups of modules. Joining together the solar panels and fastening said panels to the metal horizontal rods is carried out by means of gluing with a high-performance adhesive, which in turn allows these two elements, solar panels and horizontal rods, to form another, larger element easier to transport. The number of solar panels that comprise the modules varies, depending on the total surface area in which the solar panels are to be assembled.

Another advantage is the reduced weight of the sun-follower assembly, by virtue of the optimized design that provides the robustness required but using less material than current structures.

Based on all the aforementioned characteristics and advantages, we must also point out that the sun-follower of the present invention supports the use of standard parts, easily found on the market, in the assembly and joining of the different components, which lowers costs, expedites assembly and substantially reduces the weight of the structure with respect to conventional systems.

In summary, the preassembly achieved through the new structural characteristics of the sun-follower described herein represents a considerable advantage over conventional systems, in addition to facilitating transport, as mentioned previously, without forgetting the simpler and faster assembly thereof.

### DESCRIPTION OF THE DRAWINGS

In order to complement the previous description and further explain the characteristics of the invention, a set of drawings is included in which a preferred embodiment of said invention has been represented in an illustrative and non-limitative manner:

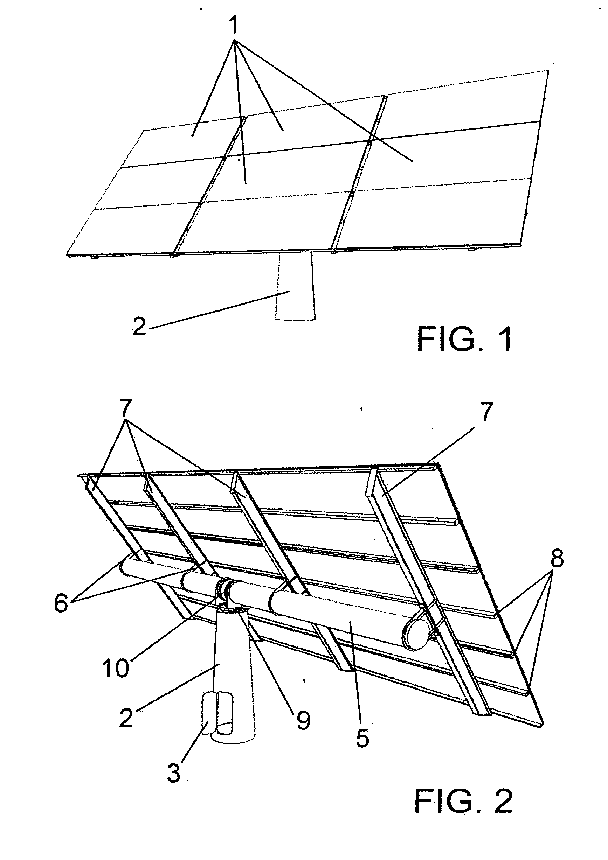

- Fig. 1: represents a general perspective and front view of the sun-follower of the invention mounted on the corresponding reinforced concrete column;
- Fig. 2: shows a general perspective rear view of the sun-follower represented in the previous figure;
- Fig. 3: represents a perspective exploded view of the system by which the solar panel support rods are fastened to the corresponding crossbeams;
- Fig. 4: shows a perspective view of the same assembly represented in the previous figure, but with the rods interrupted at their intersection with the crossbeams, in addition to the corresponding socket or tubular part whereto the ends of said interrupted rods are connected at said point of intersection;

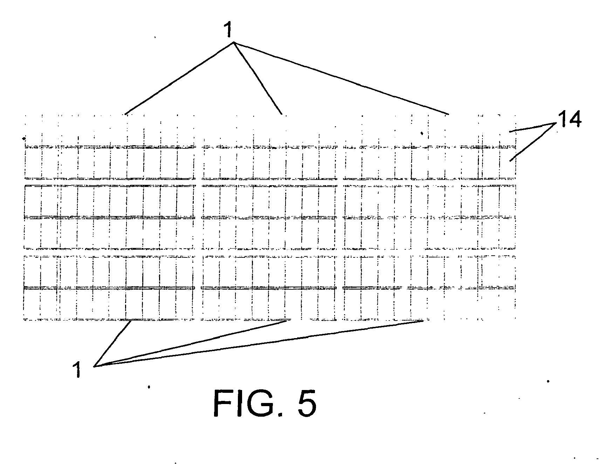

- Fig. 5: shows an example of solar panels grouped into modules. In this example 9 independent, factory-preassembled modules can be observed. Each module is comprised of a set of 16 or 20 solar panels.

### PREFERRED EMBODIMENT OF THE INVENTION

Based on the aforementioned figures, the sun-follower of the invention comprises, in a conventional manner, a plurality of factory-preassembled solar panel (14) modules (1), which are in turn mounted on a mobile structure capable of azimuthal rotation (9) for azimuthal tracking, in addition to zenithal rotation (10), whereby the solar panels are tilted in such a way as to enable zenithal tracking.

Said mobile structure, according to the invention, is mounted on a hollow reinforced concrete column (2) which houses all the devices, units and electronic components that ensure the proper functioning of the sun-follower assembly, and which has a door (3) to access its interior. Said column (2) has a truncated-cone or truncated-pyramid configuration and rests on adequate footing, previously built on the ground.

A support (4) is mounted on the top of the said column (2), whereon the mobile and metal structure is mounted so as to enable azimuthal rotation, which consists of a robust and resistant metal and horizontal tube (5), preferably cylindrical, transversally whereto several crossbeams (7) comprised of rolled steel or formed plate profiles are vertically fastened to their respective supports (6), whereon a plurality of rods (8) are positioned transversally to said crossbeams (7), representing the means of support for the modules (1) which are in turn comprised of groups of solar panels (14) which are glued together using an adequate, high-performance adhesive, not requiring mechanical elements or parts of any kind, such as screws, weldings, etc.

In addition to the aforementioned peculiarities and advantages of the sun-follower, it has been specially designed to expedite and improve the construction process from the manufacturing process to onsite assembly, in addition to its lack of special transport requirements thanks to its aforementioned modular design (1) containing groups of solar panels (14).

The modules (1) and the metal and horizontal tube (2), crossbeams (7) and rods (8), are transported to the construction site in a simple and easy manner, and assembled onsite; with the special characteristic that the rods (8) and crossbeams (7) are joined together by means of inverted "U-shaped" parts (11) which are clamped to the rods (8) and fastened to the crossbeams (7) through screws (12), in such a way as to allow sliding along the rods (8) in both directions, and the "U-shaped" parts (11) are fastened to the crossbeams (7) through flaps (11') wherein the ends of the side branches of said "U-shaped" parts (11) are extended.

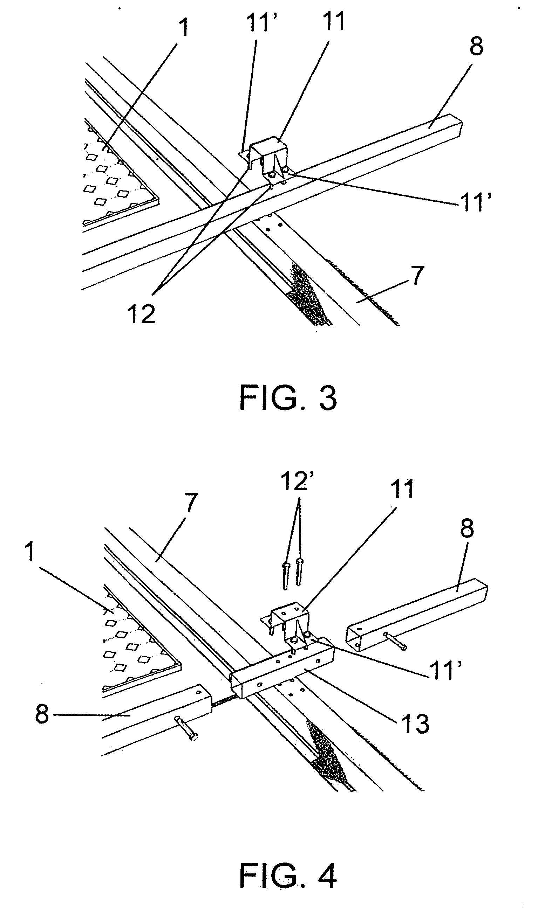

In a variation on the embodiment shown in Figure 4, the rods (8) are interrupted at their point of union or intersection with the crossbeams (7), determining two confronting ends which are connected to either side of a tubular part or socket (13) whereon the "U-shaped" part (11) is precisely mounted so that, in addition to the screws (12) that fasten said parts (11) to the crossbeams (7), a second set of screws (12') join the ends of the rods (8) and the socket (13) together, after said screws (12') have been previously passed through the upper and middle branch of the "U-shaped" part (11), as said parts (11) are fastened to the crossbeams (7) through the aforementioned flaps (11') or extensions of the side branch ends of the repeated "U-shaped" parts (11).

Finally, azimuthal tracking (9) is achieved by means of a calyx actuated in two different ways. One by a worm screw and another by a driving pinion; while zenithal tracking (10), apart from the two aforementioned possibilities, is also achieved by means of an electric or hydraulic actuator that guarantees the required movements.

## Claims

1. Sun-follower which, consisting of a mobile metal structure whereon a plurality of solar panels (14) are mounted, the surfaces whereof are struck by solar rays as a consequence of the alignment acquired by the mobile support structure, due to a support column (2) included in its assembly which enables azimuthal (9) and zenithal (10) tracking, providing the structure and therefore the solar panels (14) with tilting capacity, is **characterized in that** the support column (2) is made of reinforced concrete, while the mobile structure, mounted on the top of said support column (2), is comprised of a robust metal and horizontal tube (5), spirally welded, whereon a plurality of crossbeams (7) are rigidly solidly joined, whereto a series of rods (8) are in turn transversally fastened as support elements for the corresponding solar panels (14).

2. Sun-follower, according to Claim 1, **characterized in that** the support column (2) is hollow to house and protect the different electrical units and/or electronic components required to move the sun-follower in an adequate manner.

3. Sun-follower, according to the previous claims,
**characterized in that** the support column (2) has a preferably truncated-cone or truncated-pyramid configuration, and has the corresponding door (3) to access its interior.

4. Sun-follower, according to Claim 1, **characterized in that** the different elements that comprise the mobile metal structure and their respective joining and bonding means include a protection based on galvanization, paint or duplex systems.

5. Sun-follower, according to claims 1 and 4,
**characterized in that** the crossbeams (7) rigidly solidarized to the horizontal tube (5) preferably consist of rolled steel or formed plate profiles.

6. Sun-follower, according to Claim 1, **characterized in that** the solar panels (1) are joined together and to the support rods (9) by means of gluing with a high-performance adhesive.

7. Sun-follower, according to Claim 1, **characterized in that** the joint between the rods (8) and the crossbeams (7) is achieved by means of inverted "U-shaped" parts (11) which are clamped to the rods (8) and fastened to the crossbeams (7) with screws (12), said screws (12) being threaded through flaps (11') or extensions of the side branch ends of the "U-shaped" parts (11), said screws (12) being threaded through the crossbeams (7), in such a way as to allow sliding along said rods (8) with respect to the crossbeams (7).

8. Sun-follower, according to claims 1 and 7,
**characterized in that** the rods (8) that form part of the modules (1) wherein the solar panels (14) are grouped are interrupted at their point of intersection with the crossbeams (7), whereby said interruptions have socket-like tubular sections or parts (13) whereto the ends created by the interruption of each rod (8) are connected, said connection being carried out by means of "U-shaped" parts (11) clamped to said tubular ends or sockets (13), the ends of the interrupted rods (8) being fastened to the sockets (13) by means of screws (12') threaded through the transversal branch of the respective "U-shaped" part (11), and fastened to the crossbeams (7) by means of screws (12) threaded through the flaps (11') of the "U-shaped" parts (11).

9. Sun-follower, according to Claim 1, **characterized in that** azimuthal rotation (9) is achieved by means of a calyx which is susceptible to being actuated by a worm screw or driving pinion.

10. Sun-follower, according to Claim 1, **characterized in that** zenithal rotation (10) is achieved by means of a calyx which is susceptible to being actuated by a worm screw or driving pinion.

11. Sun-follower, according to Claim 10, **characterized in that** zenithal rotation (10) is susceptible to being achieved by means of an electrical or hydraulic actuator.

12. Preassembly, transport and final assembly procedure of the sun-follower described in the previous claims, **characterized in that**, in the preassembly process, the solar panels (14) are joined together forming groups thereof, after which said solar panels (14) are fastened to the horizontal rods (8) to form modules (1), thereby concluding the preassembly phase, after which each constituent element of the sun-follower is transported to the installation site, where the final assembly of said sun-follower takes place, specifically the modules (1) on the crossbeams (7) and then the rest of the constituent elements.
